# EUROPEAN PATENT APPLICATION

(11) **EP 2 492 851 A1**
(43) Date of publication of application: **29.08.2012**
(21) Application number: 11155374.9
(22) Date of filing: 22.02.2011
(51) Int. Cl.: G06Q 10/00

(54) **Methods for controlling resources in logistic systems**

(71) Applicant: APM Terminals Management B.V., 2593 HW Den Haag (NL)
(72) Inventor: Dirven, Geert-Jan, 2593 Den Haag (NL)
(74) Representative: Boesen, Johnny Peder

(57) **Abstract**

Disclosed is a method of controlling resources in a logistic system comprising cargo handling equipment configured to move cargo within said logistic system, said method comprising: receiving a first list of tasks to be performed by said logistic system within a first time frame. Receiving data indicative of the state of the logistic system. Processing said received data indicative of the state of the logistic system and said received first list of task using a mathematical optimizer having a predetermined optimization target, to generate control signals for said cargo handling equipment; and control said cargo handling equipment using said generated control signals to allocate cargo. Wherein the steps are repeated iteratively to allocate containers within said cargo terminal.

## Description

### Field

This invention generally relates to methods for controlling logistic systems for transferring cargo from a first form of transportation to a second form of transportation, and to logistic system utilizing such methods. Examples of such logistic systems are container terminals and airport cargo systems.

### Background

Control of logistic systems is generally a challenging task that requires highly skilled labour. The fast growth of world trade has made logistic systems such as container terminals and airport cargo systems to grow equally, making the Environment very complicated. This pushes the organizing skill to the limit of the persons controlling the logistic systems. To minimize the cost and possible delay it is important that the resources of a logistic system are used efficiently. Additionally, it is a requirement that the systems are reliable so that no cargo get stuck or lost.

Flexibility is a further important requirement of a logistic system as schedule changes are likely to happen due to uncontrollable factors such as weather conditions or labour mishandling, interruptions or strikes.

As modern logistic systems typically are controlled by skilled individuals having specific knowledge and experience of the particular systems, they are correspondingly dependent on these key people. This makes the logistic systems vulnerable to employees leaving for other jobs or retirement.

It remains a problem to provide a method and/or logistic system that can control resources in an effective and reliable manner.

### Summary

According to a first aspect the invention relates to a method of controlling resources in a logistic system comprising cargo handling equipment configured to move cargo within said logistic system, said method comprising:
a) receiving a first list of tasks to be performed by said logistic system within a first time frame;
b) receiving first system data indicative of the state of the logistic system e.g. sensor signals from said cargo handling equipment indicative of the state of said cargo handling equipment and data indicative of the location of the cargo within said cargo terminal;
c) processing said received first system data indicative of the state of the logistic system and said received first list of task using a mathematical optimizer having a predetermined optimization target, to manage any given constraints of the logistic system and generate control signals for said cargo handling equipment; and
d) control said cargo handling equipment using said generated control signals to allocate cargo; and
wherein steps a-d is repeated iteratively (e.g. on a near-real-time frequency) to allocate cargo within said logistic system.

Consequently, an efficient method of controlling a logistic system is provided securing that the resources of the logistic system is used most efficiently dependent on a particular optimization target.

A logistic system is defined as a comprehensive system where cargo is transferred from a first form of transportation to a second form of transportation. The first and second form of transportation may be equal or the first form of transportation may be different from the second form of transportation. Examples of forms of transportation are by a land vehicle such as a truck or a train, by sea vehicle such as a container ship or barge, or by an airplane. Examples of logistic systems are maritime container terminals, inland container terminals, or airport cargo systems.

Step a to c may be performed in a processing unit located in the logistic system or on a remote server. The processing unit may be connected to communication means for receiving and transmitting data. The communication means may be wired or wireless communication means. The communication means may be configured to receive data indicative of the state of the logistic system. The communication means may be connected to a telecommunication network such as the internet

In some embodiments, the mathematical optimizer uses a mathematical model of the logistic system describing the capabilities and constraints of the cargo handling equipment.

The mathematical optimizer may be any optimizer e.g. a linear or non linear optimizer. Examples of commercial available optimization software are AIMMS, AMPL, APMonitor, BARON,CPLEX, COMET, IMSL, IPOPT, FortMP, FortSP, General Algebraic Modeling System, modeFRONTIER, Maple_(software), Mathematica, NMath, IOSO, OptimJ, SNOPT, Quintiq or VisSim.

The mathematical model may describe the logistic system e.g. it may describe the particular cargo handling equipment of a particular logistic system and the layout of the particular logistic system. The mathematical model may describe the constraints of the cargo handling equipment such as max speed, max lifting capacity etc.

The first time frame may be within 1 minute, within 2 minutes, within 5 minutes, within 10 minutes within 30 minutes, within 1 hour, within 2 hours, within 5 hours, within 12 hours, within 1 day, within 2 days, within 5 days, within 10 days, within 1 month, within 2 month within 6 month, within 1 year, or within 2 years.

The first list of tasks may comprise at least 2 tasks, at least 3 tasks, at least 5 tasks, at least 10 tasks, at least 20 tasks, at least 50 tasks, at least 500 tasks or at least 1000 tasks.

The first list of task may comprise no more than 2 tasks, no more than 3 tasks, no more than 5 tasks, no more than 10 tasks, no more than 20 tasks, no more than 50 tasks, no more than 500 tasks, no more than 1000 tasks or no more than 10000 tasks.

Step a-d may be repeated iteratively in a near-real-time frequency. Step a-d may be repeated iteratively at least 1 time pr day, at least 1 time pr 12 hours, at least 1 time pr 6 hours, at least 1 time pr 2 hours, at least 1 time pr hour, at least on time pr 30 minutes, at least 1 time pr 15 minutes, at least 1 time pr 10 minutes, at least 1 time pr 5 minutes, at least 1 time pr 2 minutes, at least 1 time pr minute, at least 1 time pr 30 seconds, at least 1 time pr 15 seconds, at least 1 time pr 5 second, or at least 1 time pr second.

The tasks may be simple tasks, advanced tasks, or a combination of simple and advanced tasks. A simple task is defined as a task that can be carried out by a single piece of cargo handling equipment. An advanced task is defined as a task that requires at least two pieces of cargo handling equipment to be carried out.

The cargo handling equipment of the logistic may be fully automated equipment capable of carrying out its tasks without human interaction, manual equipment operated equipment or a combination of the two.

In some embodiments, the cargo handling equipment comprises at least one piece of manually operated equipment.

The logistic system may comprise storage facilities for temporarily storing cargo before it is loaded onto the second form of transportation.

The first system data indicative of the state of the logistic system may comprise data indicative of the state of the cargo handling equipment and/or data indicative of the state of the storage facilities and/or data related to loading / unloading vehicles. Data indicative of the cargo handling equipment may be data indicative of the position of the cargo handling equipment in the logistic system and/or the current tasks of the cargo handling equipment. Data indicative of the state of the storage facilities may be data indicative of the position of cargo in the storage facilities. Data related to loading / unloading vehicles such as container vessels or trucks, may be data related to the expected arrival / departure of the loading / unloading vehicles and/or their assigned unloading / loading facilities.

Cargo handling equipment is defined as any machine capable of transporting cargo such as a truck, a crane, or a conveyer belt.

Examples of resources in a logistic system is cargo handling equipment, storage facilitates, and cargo unloading/loading facilities.

The cargo handling equipment may comprise a number of sensors for providing data indicative of its state such as positional sensors e.g. a GPS sensor. The cargo handling equipment may further comprise communication means for transmitting data.

In some embodiments, the mathematical optimizer generates a specific control signal for a specific cargo handling equipment, wherein the specific control signal controls the specific cargo handling equipment to carry out a specific task.

The specific task may be a full task from a list tasks e.g. the first list of tasks, or part of a full task from a list of tasks.

In some embodiments, said cargo handling equipment is controlled by automatically transmitting said generated control signal to said cargo handling equipment.

The control signals may be transmitted to the cargo handling equipment automatically without human interaction. The control signals may be transmitted using wired or wireless communication means.

Consequently, control signals for cargo handling equipment may both be generated and transmitted automatically without human interaction.

In some embodiments, step d further comprises: receiving feedback data from at least one cargo handling equipment indicative of the success of said at least one cargo handling equipment to allocate cargo, wherein the first list of tasks is updated based on the received feedback data.

Consequently, the system is capable of automatically managing exceptions thus eliminating the need for human supervision. Thereby a more reliable system is provided.

The feedback data may be data automatically generated by the cargo handling equipment or the feedback data may be manually or partly manually generated by an operator of the at least one cargo handling equipment. The feedback data may indicate if the at least one cargo handling equipment has succeeded a specific task e.g. if it has moved a specific piece of cargo from a specific first position to a specific second position.

In some embodiments, the method further comprises generating at least a part of the first list of tasks by:
e) receiving a second list of tasks to be performed by said logistic system within a second time frame;
f) receiving second system data indicative of the state of the logistic system,
g) processing said received second list of tasks and said received second system data indicative of the state of the logistic system, using a mathematical optimizer having a predetermined optimization target to generate at least a part of said first list of tasks;
wherein the steps e-g is repeated iteratively.

Consequently, a more dynamic control of resources in a logistic system may be achieved as processes in two different time frames may be optimized.

The second time frame may be within 1 minute, within 2 minutes, within 5 minutes within 10 minutes within 30 minutes, within 1 hour, within 2 hours, within 5 hours, within 12 hours, within 1 day, within 2 days, within 5 days, within 10 fays, within 1 month, within 2 month within 6 month, within 1 year, or within 2 years.

The second list of task may comprise at least 2 tasks, at least 3 tasks, at least 5 tasks, at least 10 tasks, at least 20 tasks, at least 50 tasks, at least 500 tasks or at least 1000 tasks.

The second list of task may comprise no more than 2 tasks, no more than 3 tasks, no more than 5 tasks, no more than 10 tasks, no more than 20 tasks, no more than 50 tasks, no more than 500 tasks, no more than 1000 tasks or no more than 10000 tasks.

The second system data indicative of the state of the logistic system may comprise data indicative of the state of the cargo handling equipment and/or data indicative of the state of the storage facilities and/or data related to loading / unloading vehicles. Data indicative of the cargo handling equipment may be data indicative of the position of the cargo handling equipment in the logistic system and/or the current tasks of the cargo handling equipment. Data indicative of the state of the storage facilities may be data indicative of the position of cargo in the storage facilities. Data related to loading / unloading vehicles such as container vessels or trucks, may be data related to the expected arrival / departure of the loading / unloading vehicles and/or their assigned unloading / loading facilities. The second system data may be equal to the first system data or some of the data may be different. The second system data may comprise selected data related to optimizing processes within the second time frame, and the first system data may comprise selected data related to optimize processes within the second time frame.

In some embodiment, the first time frame is shorter than the second time frame.

In some embodiments, the first list of task comprises at least one simple task, and the second list of tasks comprises at least one complicated task.

In some embodiments, step g further comprises the step of generating control signals for controlling elements related to the logistic system, wherein the generated control signal is used to control elements related to the logistic system.

Examples of elements related to the logistic system are cargo handling equipment, temporarily storage position for cargo, and/or loading/unloading facilities e.g. berth positions and berth time in maritime container terminals and/or assignment of loading and/or unloading facilities for trucks and/or trains in maritime and inland container terminals. The generated control signals may assign elements related to the logistic system to trucks, trains, planes or ships that are loading and or unloading cargo at the logistic system e.g. the generated control signals may assign a specific berth position to a specific incoming ship.

In some embodiments, the method further comprises generated at least a part of the second list of tasks by:
h) receiving a third list of tasks to be performed by said cargo terminal within a third time frame;
i) receiving third system data indicative of the state of the logistic system,
j) processing said received third list of tasks and said received third system data indicative of the state of the logistic system using a mathematical optimizer having a predetermined optimization target to generate at least part of said second list of tasks;
wherein the steps h-j is repeated iteratively.

Consequently, an even more dynamic control of resources in a logistic system may be achieved as processes in three different time frames may be optimized.

The third time frame may be within 1 minute, within 2 minutes, within 5 minutes within 10 minutes within 30 minutes, within 1 hour, within 2 hours, within 5 hours, within 12 hours, within 1 day, within 2 days, within 5 days, within 10 fays, within 1 month, within 2 month within 6 month, within 1 year, or within 2 years.

The third list of task may comprise at least 2 tasks, at least 3 tasks, at least 5 tasks, at least 10 tasks, at least 20 tasks, at least 50 tasks, at least 500 tasks or at least 1000 tasks.

The third list of task may comprise no more than 2 tasks, no more than 3 tasks, no more than 5 tasks, no more than 10 tasks, no more than 20 tasks, no more than 50 tasks, no more than 500 tasks, no more than 1000 tasks or no more than 10000 tasks.

The third system data indicative of the state of the logistic system may comprise data indicative of the state of the cargo handling equipment and/or data indicative of the state of the storage facilities and/or data related to loading / unloading vehicles. Data indicative of the cargo handling equipment may be data indicative of the position of the cargo handling equipment in the logistic system and/or the current tasks of the cargo handling equipment. Data indicative of the state of the storage facilities may be data indicative of the position of cargo in the storage facilities. Data related to loading / unloading vehicles such as container vessels or trucks, may be data related to the expected arrival I departure of the loading / unloading vehicles and/or their assigned unloading / loading facilities. The third system data may be equal to the second and first first system data or some of the data may be different from the second and first system data. The third system data may comprise selected data related to optimizing processes within the third time frame, the second system data may comprise selected data related to optimizing processes within the second time frame, and the first system data may comprise selected data related to optimize processes within the second time frame.

In some embodiment, the second time frame is shorter than the third time frame.

In some embodiments, step g further comprises the step of generating control signals for controlling elements related to the logistic system, wherein the generated control signal is used to control elements related to the logistic system.

Examples of elements related to the logistic system are cargo handling equipment, temporarily storage position for cargo, and/or loading/unloading facilities e.g. berth positions and berth time in maritime container terminals and/or assignment of loading and/or unloading facilities for trucks and/or trains in maritime and inland container terminals. The generated control signals may assign elements related to the logistic system to trucks, trains, planes or ships that are loading and or unloading cargo at the logistic system e.g. the generated control signals may assign a specific berth position to a specific incoming ship.

In some embodiments, at least one of said cargo handling equipment comprises a communication unit configured to provide instructions to the operator of said at least one cargo handling equipment.

Consequently, manual operated cargo handling equipment may be controlled automatically. Thereby both manual and automated resources may be controlled without the need of human supervision in an effective and reliable manner.

The communication unit may be any communication unit capable of delivering instructions, such any kind of screen or any kind of loudspeaker.

In some embodiments, the communication unit is further configured to receive input from the operator of said at least one cargo handling equipment and to transmit the received input thereby allowing the operator of the at least one cargo handling equipment to generate a feedback signal.

The communication unit may receive input from any kind of input device, such as a button or a number of buttons, a keyboard, a mouse, or a touch screen.

In some embodiments, the communication unit comprises a display for displaying instruction.

In some embodiments the display of the communication unit is a touch screen.

In some embodiments, the generated control signals comprises custom made driving instructions for a particular cargo handling equipment, generated in at least partly based on the positioning of other cargo handling equipment within the logistic system.

In some embodiments the communication unit in a particular cargo handling equipment is configured to deliver the custom made driving instructions for the particular cargo handling equipment.

The communication unit may deliver the custom made driving instructions by displaying them on a display.

In some embodiments, the logistic system is a maritime container terminal.

In some embodiments, the logistic system is an inland container terminal.

In some embodiments, the logistic system is an airport cargo system.

In some embodiments, containers are used for storing cargo.

A container terminal may comprise cargo handling equipment such as quay crane/s for loading containers onto container vessels, prime mover/s for transporting containers within the container terminal, and yard crane/s for lifting containers from their storage position. A container terminal may comprise storage facilities for storing a number of cargo containers before the cargo containers are transported onto container vessels. Additionally, a container terminal may comprise a number of berth positions for allowing container vessels to receive containers from the container terminal.

In some embodiments the optimization target is one or more of the requirements:
- pace
- cost
- space

According to a second aspect the invention relates to a logistic system comprising cargo handling equipment configured to move cargo within said logistic system, said logistic system further comprising a processing unit configured to:
a) receiving a first list of tasks to be performed by said logistic system within a first time frame;
b) receiving first system data indicative of the state of the logistic system e.g. sensor signals from said container handling equipment indicative of the state of said container handling equipment and data indicative of the location of the containers within said cargo terminal
c) processing said received first system data indicative of the state of the logistic system, said received first list of task using a mathematical optimizer having a predetermined optimization target using a mathematical optimizer, to generate control signals for said cargo handling equipment,
d) transmit the generated control signal to said cargo handling equipment;
   wherein steps a-d is repeated iteratively and wherein the cargo handling equipment allocate cargo within said logistic system based on the transmitted control signals.

The processing unit may be positioned in proximity of the cargo handling equipment or it may be positioned remotely from the cargo handling equipment. The processing unit may be connected to communication means for receiving data and transmitting data. The communication means may be wired or wireless communication means. The communication means may be configured to receive data indicative of the state of the logistic system. The communication means may be connected to a telecommunication network such as the internet

Here and in the following, the terms 'processing means' and 'processing unit' are intended to comprise any circuit and/or device suitably adapted to perform the functions described herein. In particular, the above term comprises general purpose or proprietary programmable microprocessors, Digital Signal Processors (DSP), Application Specific Integrated Circuits (ASIC), Programmable Logic Arrays (PLA), Field Programmable Gate Arrays (FPGA), special-purpose electronic circuits, etc., or a combination thereof

The different aspects of the present invention can be implemented in different ways including the methods of controlling resources in a logistic system and the logistic systems described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependent claims. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 a shows a flowchart of a method of controlling resources in a logistic system according to an embodiment of the present invention.
Fig. 1b shows a flowchart of a method of controlling resources in a logistic system where processes are optimized in two different time frames according to an embodiment of the present invention.
Fig. 1c shows a flowchart of method of controlling resources in a logistic system where processes are optimized in three different time frames according to an embodiment of the present invention.
Fig. 2 shows a logistic system according to an embodiment of the present invention.
Fig. 3 shows a schematic drawing of a communication unit according to an embodiment of the present invention.

### Detailed description

In the following description, reference is made to the accompanying figures, which show by way of illustration how the invention may be practiced.

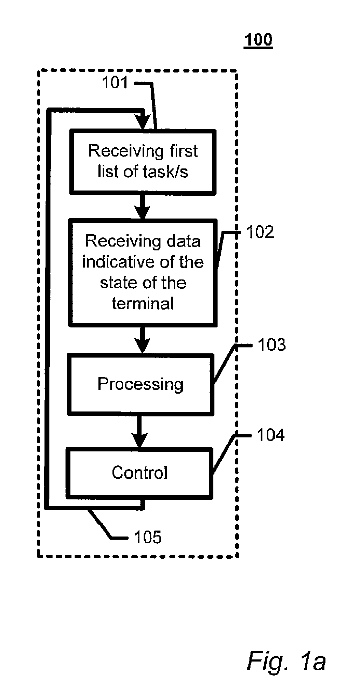

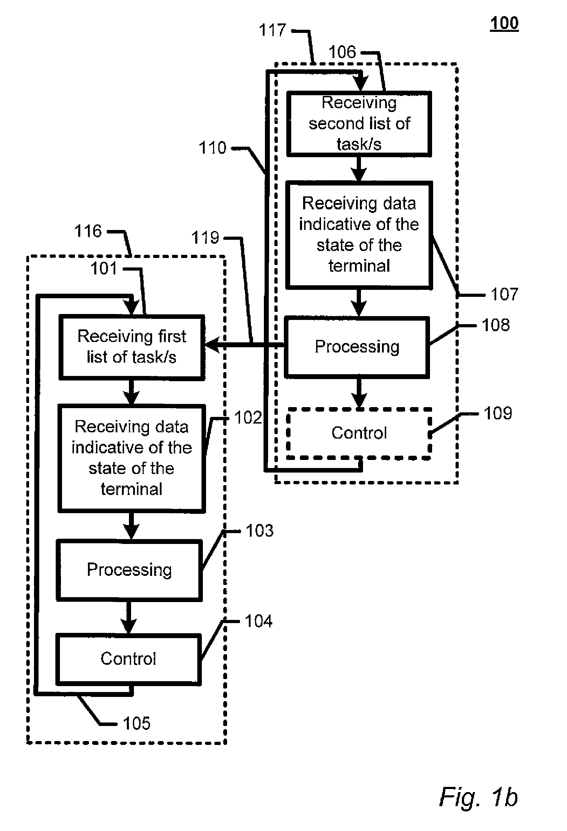

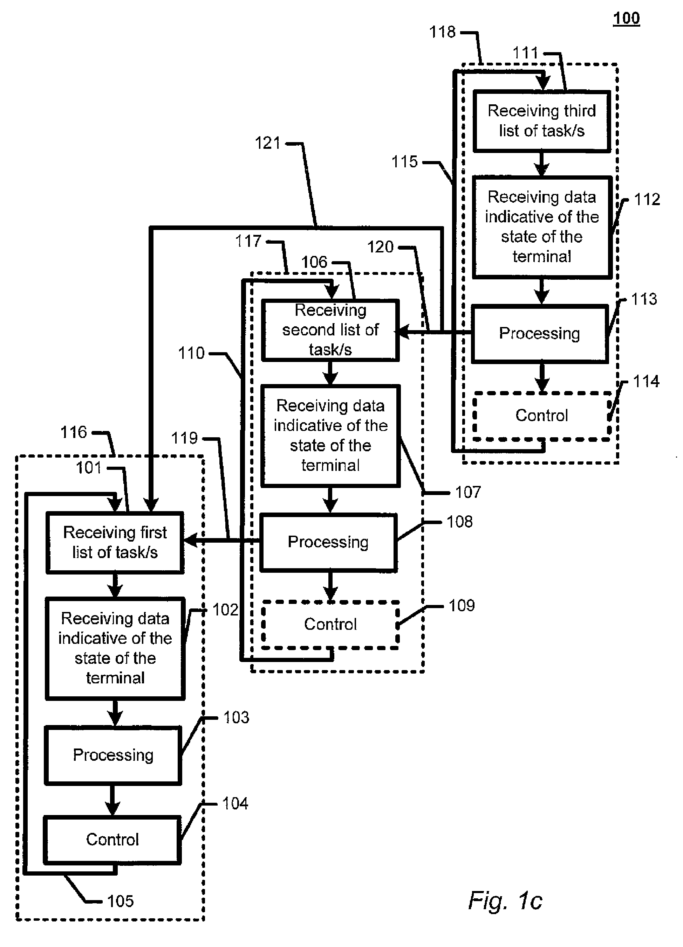

Figure 1 a shows a flowchart of a method of controlling a logistic system 100 according to an embodiment of the present invention. First in step 101 a first list of tasks to be performed within a first time frame is received. Next, in step 102 first system data indicative of the state of the logistic system is received. Then, in step 103 the received first system data and received first list of tasks is processed by using a mathematical optimiser that attempts to optimize usage of the resources in the logistic system according to a predetermined optimization target such as pace, cost or space. The mathematical optimizer may use a mathematical model of the logistic system describing the layout of the logistic system and the properties of the cargo handling equipment within the logistic system. The mathematical optimizer generates control signals that is used in step 104 to control the cargo handling equipment to carryout at least a part of at least some of the tasks of the first list of tasks. Step 104 may optionally further include the step of receiving feed back data from the cargo handling equipment indicative of the success of said cargo handling to carry out their tasks. The process is iteratively repeated 105 to move cargo within the logistic system.

Figure 1b shows a flowchart of a method of controlling a logistic system 100 according to an embodiment of the present invention. The shown flowchart comprises two independent loops 116 117 optimizing processes in a logistic system in different time frames. The first loop 116 may optimize processes in a short time frame e.g. minutes to below seconds , and the second loop 117 may optimize processes in a medium time frame e.g. minutes to days.

The method starts in the first loop 116 by receiving a first list of tasks 101 to be performed within a short time frame. The tasks may be any tasks related to the logistic system e.g. a list of containers that needs to be moved from a first position to a second position. In step 102 the method in the first loop 116 receives first system data indicative of the state of the logistic system. The first system data may be specific data important for optimizing and executing processes in a short time frame. In step 103 the received first list of tasks and the received first system data is processed together using a mathematical optimizer having an optimization target e.g. speed, low-cost, or space to generate control signals. In step 104 the generated control signals are transmitted to container handling equipment to automatically control the allocation of cargo within the logistic system. The above described steps 101-104 are repeated 105 to iteratively re optimize and control the processes.

The method starts in the second loop 117 by receiving a second list of tasks 106 to be performed within a medium time frame. The tasks may again be any tasks related to the logistic system. In step 107, the method in the second loop 117 receives second system data indicative of the state of the logistic system. The second system data may be specific data important for optimizing and executing process in a medium time frame. In step 108 the received second list of tasks and the received second system data is processed together using a mathematical optimizer having an optimization target e.g. speed, low-cost, or space to generate at least a part of the first list of tasks 101 used in the first loop 116. The second loop 117 may optionally comprise step 109 where the mathematical optimizer additionally generates control signals for controlling elements related to the logistic system. The above described steps are repeated 110 to iteratively re-optimize and control the processes.

Figure 1c shows a flow chart of a method of controlling a logistic system according to an embodiment of the present invention. In this embodiment the logistic system is a maritime container terminal however the principles may be used in other logistic systems. The shown flow chart comprises three independent loops 116 117 118 optimizing processes in a maritime container terminal in different time frames. The first loop 116 may optimize processes in a short time frame e.g. minutes to below seconds , the second loop 117 may optimize processes in a medium time frame e.g. minutes to days, and the third loop 118 may optimize processes in long time frame e.g. days to years.

The method starts in the first loop 116 by receiving a first list of tasks 101 to be performed within a short time frame. The tasks may be any tasks related to the maritime container terminal e.g. a list of simple tasks such as a list of containers that needs to be moved from a first position to a second position. In step 102 the method in the first loop 116 receives first system data indicative of the state of the maritime container terminal. The first system data may be specific data important for optimizing and executing processes in a short time frame e.g. data related to the position of cargo containers in the maritime container terminal or the state of container handling equipment e.g. the position and condition of quay cranes, prime movers or yard cranes. In step 103 the received first list of tasks and the received first system data is processed together using a mathematical optimizer having an optimization goal e.g. speed, low-cost, or space to generate control signals. In step 104 the generated control signals are transmitted to container handling equipment to automatically control the allocation of containers within the cargo terminal e.g. a first control signal may be transmitted to a specific yard crane, a second control signal may be transmitted to a specific prime mover, and a third control signal may be transmitted to a specific quay crane, where the first control signal controls the specific yard crane to lift a specific container onto the specific prime mover, the second control signal controls the prime mover to drive towards the original position of the specific container and receive the specific container from the specific yard crane, and further drive the specific container to the specific quay crane, where the third control signal controls the specific quay crane to lift the specific container onto a desired position on a ship. The cargo handling equipment may be fully automated or manually operated. When cargo handling equipment is manually operated cargo handling equipment may comprise communication unit for receiving the automatically generated control signals, controlling the human operator to perform a particular task using the cargo handling equipment. The above described steps 101-104 are repeated 105 to iteratively re optimize and control the processes. The steps may be repeated with a desired frequency e.g. every second, every 10 seconds, or every minute.

The method starts in the second loop 117 by receiving a second list of tasks 106 to be performed within a medium time frame. The tasks may again be any tasks related to the maritime container terminal e.g. a list of containers that needs to be loaded to particular container vessels where the handling of the specific containers to their specific vessel may need the cooperation of a plurality of cargo handling equipment. In step 107, the method in the second loop 117 receives second system data indicative of the state of the cargo terminal. The second system data may be specific data important for optimizing and executing process in a medium time frame e.g. data related to the expected arrival and/or departure of container vessels in the container terminal, berth status, the position of cargo containers in the cargo terminal or the state of container transport equipment e.g. the position and condition of quay cranes, prime movers or yard cranes. In step 108 the received second list of tasks and the received second system data is processed together using a mathematical optimizer having an optimization target e.g. speed, low-cost, or space to generate at least part of the first list of tasks 101 used in the first loop 116 e.g. the processing step 108 may generate a list of containers that need to be moved from a first position to a second position. The second loop 117 may optionally comprise step 109 where the mathematical optimizer additionally generates control signals for controlling elements related to the logistic system to units e.g. control signals may be generated that assigns specific berth positions to incoming container vessels. The steps may be repeated with a desired frequency e.g. every second, every 10 seconds, every minute, every hour, or every day.

The method starts in the third loop 118 by receiving a third list of tasks 111 to be performed within a long time frame. The tasks may again be any tasks related to the cargo terminal e.g. a list of containers that needs to be shipped from a first destination to a second destination. In step 112 the method in the third loop 117 receives third system data indicative of the state of the cargo terminal. The third system data may be specific data important for optimizing and executing process in a long time frame e.g. the expected arrival and/or departure of container vessels in the container terminal, the position of cargo containers in the cargo terminal or statistical data related to the performance of the container terminal. In step 113 the received third list of tasks and the received third system data is processed together using a mathematical optimizer having an optimization target e.g. speed, low-cost, or space to generate at least a part of a part of the second list of task 106 used in the second loop 117 and/or a part of the first list of task 101 used in the first loop 116 e.g. the processing step 113 may generate a list of containers that needs to be loaded to one or more particular container vessels and/or a list of containers that need to be moved from a first position to a second position within the container terminal. The third loop 121 may optionally comprise step 114 where the mathematical optimizer additionally generates control signals for controlling elements related to the logistic system e.g. specific containers may be assigned specific yard location and/or a specific container vessel to be transported by. The above described steps are repeated 115 to iteratively re optimize and control the processes. The steps may be repeated with a desired frequency e.g. once every second, once every minute, once every hour, once every day, or once every year.

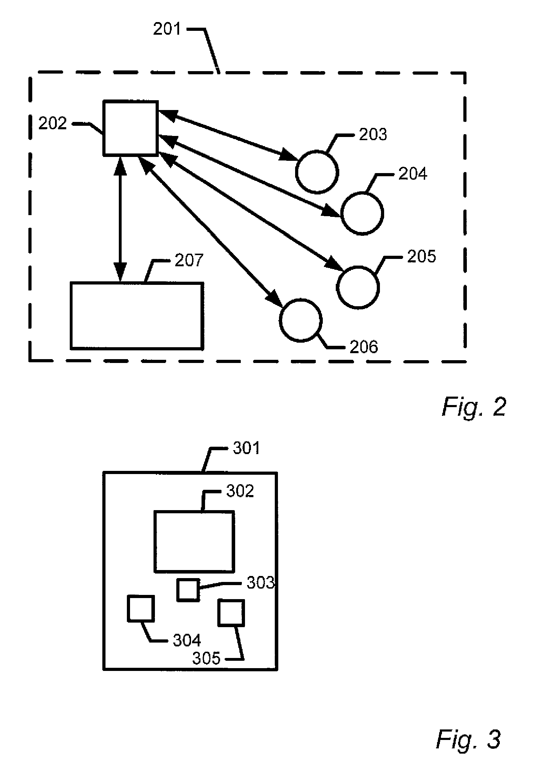

Figure 2 shows a logistic system 201 according to an embodiment of the present invention. The logistic system 201 comprises a number of cargo handling equipment 203 204 205 206, a processing unit 202, and storage facilities 207. The processing unit 202 receives system data indicative of the state of the logistic system 201. By using a mathematical optimizer, the processing unit 202 generates control signals for the cargo handling equipment 203 204 205 206 as described above.

Figure 3 shows communication unit 301 according to an embodiment of the present invention. The communication unit 301 may be fitted inside manually operated cargo handling equipment e.g. inside manually operated trucks or cranes. This allows the human operator to be provided with instructions automatically generated by mathematical optimization. The communication unit 301 may comprise a screen 302, a processing unit 303, input means 305, and communication means 304 for receiving instructions and transmitting feedback data. The input mean 305 may be any means suitable for allowing a human operator of a specific cargo handling equipment to generate feedback data. The input means 305 may be combined with the screen 302 e.g. in a touch screen.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method of controlling resources in a logistic system comprising cargo handling equipment configured to move cargo within said logistic system, said method comprising:
a) receiving a first list of tasks to be performed by said logistic system within a first time frame;
b) receiving first system data indicative of the state of the logistic system;
c) processing said received first system data and said received first list of task using a mathematical optimizer having a predetermined optimization target, to generate control signals for said cargo handling equipment; and
d) control said cargo handling equipment using said generated control signals to allocate cargo; and
wherein steps a-d is repeated iteratively to allocate cargo within said logistic system.

2. A method of controlling resources in a logistic system according to any of the preceding claims, wherein step d further comprises: receiving feedback data from at least one cargo handling equipment indicative of the success of said at least one cargo handling equipment to allocate cargo, wherein the first list of tasks is updated based on the received feedback data

3. A method of controlling resources in a logistic system according to any of the preceding claims, wherein the method further comprises generating at least a part of the first list of tasks by:
e) receiving a second list of tasks to be performed by said logistic system within a second time frame;
f) receiving second system data indicative of the state of the logistic system,
g) processing said received second list of tasks and said received second system data indicative of the state of the logistic system, using a mathematical optimizer having a predetermined optimization target to generate at least a part of said first list of tasks;
wherein the steps e-g is repeated iteratively.

4. A method of controlling resources in a logistic system according to claim 3, wherein the first time frame is shorter than the second time frame.

5. A method of controlling resources in a logistic system according to any of claims 3 to 4, wherein the first list of task comprises at least one simple task, and the second list of tasks comprises at least one complicated task

6. A method of controlling resources in a logistic system according to any of claims 3 to 5, wherein step g) further comprises the step of generating control signals for controlling elements related to the logistic system, wherein the generated control signal is used to control elements related to the logistic system.

7. A method of controlling resources in a logistic system according to any of claims 3 to 6, wherein the method further comprises generating at least a part of the second list of tasks by:
h) receiving a third list of tasks to be performed by said cargo terminal within a third time frame;
i) receiving third system data indicative of the state of the logistic system,
j) processing said received third list of tasks, said received third system data indicative of the state of the logistic system using a mathematical optimizer having a predetermined optimization target to generate at least part of said second list of tasks;
wherein the steps h-j is repeated iteratively.

8. A method of controlling resources in a logistic system according to claim 7, wherein the second time frame is shorter than the third time frame.

9. A method of controlling resources in a logistic system according to any of claims 7 to 8, wherein step j further comprises the step of generating control signals for controlling elements related to the logistic system, wherein the generated control signal is used to control elements related to the logistic system.

10. A method of controlling resources in a logistic system according to any of the preceding, claims, wherein at least one of said cargo handling equipment comprises a communication unit configured to provide instructions to the operator of said at least one cargo handling equipment.

11. A method of controlling resources in a logistic system according to claim 10, wherein the communication unit further is configured to receive input from the operator of said at least one cargo handling equipment and to transmit the received input thereby allowing the operator of the at least one cargo handling equipment to generate a feedback signal.

12. A method of controlling resources in a logistic system according to any of the preceding claims, wherein the logistic system is a maritime container terminal

13. A method of controlling resources in a logistic system according to any of the preceding claims, wherein the logistic system is an inland container terminal.

14. A method of controlling resources in a logistic system according to any of the preceding claims, wherein the optimization target is one or more of the requirements:
- pace
- cost
- space

15. A logistic system comprising cargo handling equipment configured to move cargo within said logistic system, said logistic system comprising a processing unit configured to:
a) receiving a first list of tasks to be performed by said logistic system within a first time frame;
b) receiving first system data indicative of the state of the logistic system e.g. sensor signals from said container handling equipment indicative of the state of said container handling equipment and data indicative of the location of the containers within said cargo terminal
c) processing said received first system data indicative of the state of the logistic system, said received first list of task using a mathematical optimizer having a predetermined optimization target, to generate control signals for said cargo handling equipment,
d) transmit the generated control signal to said cargo handling equipment; wherein steps a-d is repeated iteratively and wherein the cargo handling equipment allocate cargo within said logistic system based on the transmitted control signals.
